# EUROPÄISCHE PATENTSCHRIFT

(11) **EP 2 768 891 B1**
(45) Veröffentlichungstag und Bekanntmachung des Hinweises auf die Patenterteilung: **08.08.2018**
(21) Anmeldenummer: 12773313.7
(22) Anmeldetag: 15.10.2012
(51) Int. Cl.: C08J 5/24, B32B 5/02

(54) **FASERVERSTÄRKTES POLYISOCYANURATBAUTEIL UND EIN VERFAHREN ZU DESSEN HERSTELLUNG**
FIBRE REINFORCED POLYISOCYANURATE COMPONENT AND METHOD FOR ITS PRODUCTION
COMPOSANT DE POLYISOCYANURATE RENFORCÉ PAR DES FIBRES ET PROCÉDÉ DE FABRICATION

(30) Priorität: 21.10.2011 EP 11186132
(43) Veröffentlichungstag der Anmeldung: 27.08.2014
(73) Patentinhaber: Covestro Deutschland AG, 51373 Leverkusen (DE)
(72) Erfinder: LINDNER, Stefan, 50670 Köln (DE); FRANKEN, Klaus, 51467 Bergisch Gladbach (DE); PASSMANN, Dirk, 46145 Oberhausen (DE); NORDMANN, Peter, 41359 Dormagen (DE)
(74) Vertreter: Levpat
(86) Internationale Anmeldenummer: PCT/EP2012/070391
(87) Internationale Veröffentlichungsnummer: WO 2013/057070

(56) Entgegenhaltungen:
- WO-A2-01/66669
- US-A- 4 003 859

## Beschreibung

Die vorliegende Erfindung betrifft wärmestabile faserverstärkte Polyisocyanuratbauteile, die durch Tränken von Fasern mit einer Reaktionsharzmischung aus Polyisocyanaten, Polyolen, Trimerisierungskatalysator sowie gegebenenfalls Additiven erhältlich sind, sowie ein Verfahren zu deren Herstellung.

DE 10 2009 058 101 A1 beschreibt die Verwendung von Schichtaufbauten in Windkraftanlagen, in denen Polyurethan als Kunststoff verwendet wird. Das Verhältnis von Anzahl an Isocyanatgruppen zu Anzahl gegenüber Isocyanat reaktiven Gruppen beträgt vorzugsweise zwischen 0,9 und 1,5. Die Beispiele wurden mit einem Verhältnis von Anzahl an Isocyanatgruppen zu Anzahl gegenüber Isocyanat reaktiven Gruppen von ca. 1,02 durchgeführt. Nachteilig an dem Verfahren ist, dass die Viskosität der Mischung höher ist und sich dadurch die mit Kunststoff versehene Faserschicht schwieriger herstellen lässt.

WO 2011/081622 A1 beschreibt Polyurethanzusammensetzungen für Kompositstrukturen. Die Kompositstrukturen können für Rotorblätter von Windkraftanlagen verwendet werden. Das OH/NCO Verhältnis ist mindestens 1, d.h. es gibt mindestens so viele OH-Gruppen wie NCO-Gruppen. Nachteilig an dem Verfahren ist, dass die Viskosität relativ hoch ist und der Verarbeitungszeitraum sehr kurz ist, was die Befüllung von großen Bauteilen sehr erschwert.

Faserverstärkte Kunststoffe werden als Konstruktionsmaterial verwendet, da diese eine hohe mechanische Festigkeit verbunden mit geringem Gewicht aufweisen. Dabei besteht das Matrixmaterial üblicherweise aus ungesättigten Polyesterharzen, Vinylesterharzen und Epoxidharzen.

Faserverbundwerkstoffe können beispielsweise im Flugzeugbau, im Automobilbau oder in Rotorblättern von Windkraftanlagen eingesetzt werden.

Es können die bekannten Verfahren zur Herstellung von Faserverbundbauteilen genutzt werden, wie z.B. Handlaminieren, Spritzpressen, Harzinjektionsverfahren (=Resin Transfer Moulding) oder vakuumunterstützte Infusionsverfahren (beispielsweise VARTM (Vacuum Assisted Resin Transfer Moulding)) oder die Prepregtechnologie. Besonders bevorzugt sind vakuumunterstützte Infusionsverfahren, da damit große Bauteile hergestellt werden können.

Die bisherigen Verfahren haben allerdings den Nachteil, dass es sehr lange dauert, bis die Reaktivharzmischung ausgehärtet ist, was zu einer geringen Produktivität führt. Zur Erhöhung der Produktivität ist es nötig, die Zykluszeit bei der Herstellung zu verringern. Dabei ist es wichtig, dass das Reaktionsharzgemisch sehr dünnflüssig ist und lange dünnflüssig bleibt, um die Fasern schnell und komplett zu tränken. Auf der anderen Seite sollte die Härtezeit möglichst kurz sein, um die Zykluszeit zu verringern. Dadurch lässt sich die Fertigungszeit von Faserverbundbauteilen signifikant verkürzen. Aus wirtschaftlichen Gründen ist eine niedrige Aushärttemperatur wünschenswert, da sich dadurch Energiekosten sparen lassen. Gleichzeitig sollen die Faserverbundbauteile eine hohe Wärmestabilität aufweisen, da die Faserverbundbauteile beispielsweise durch Sonnenlicht stark erhitzt werden können und dabei ihre mechanische Stabilität nicht verlieren dürfen.

Aufgabe der vorliegenden Erfindung war es daher, ein Matrixmaterial zur Verfügung zu stellen, das eine gute Tränkung und Benetzung der Fasern ermöglicht und gleichzeitig eine schnelle Aushärtung, und eine gute Hitzestabilität gewährleistet.

Diese Aufgabe konnte überraschenderweise durch Faserverbundbauteile gelöst werden, die aus Faserschichten und einer Reaktionsharzmischung aus Polyisocyanaten, Polyolen, Trimerisierungskatalysatoren sowie gegebenenfalls üblichen Additiven erhältlich sind, wobei das Verhältnis von Anzahl an Isocyanatgruppen zu Anzahl an OH-Gruppen so gewählt ist, dass sich ein Polyisocyanuratkunststoff bildet.

Polyisocyanurate (PIR) bilden sich durch die Trimerisation von Isocyanatgruppen. Der Isocyanuratring ist sehr stabil. Die Bildung von PIR-Strukturen wird durch starke Basen, besonders durch Alkaliacetate und Alkaliformiate katalysiert. Die Reaktion ist für die die Herstellung von PIR-Hartschaumstoffen bekannt. Dabei reagieren die Isocyanate am Anfang vorzugsweise mit Polyolen zu Polyurethanen und im weiteren Verlauf der Reaktion, wenn die meisten OH-Gruppen abreagiert haben, kommt es zur Polyisocyanuratbildung. Überraschenderweise konnte die Reaktion auch zur Herstellung von kompakten, optisch transparenten, faserverstärkten PIR-Platten mit einer guten Hitzestabilität verwendet werden.

Gegenstand der Erfindung sind Faserverbundbauteile enthaltend eine Faserschicht, die mit Polyisocyanurat getränkt ist, wobei das Polyisocyanurat aus einem Reaktionsgemisch erhältlich ist umfassend
A) ein oder mehrere Polyisocyanate
B) ein oder mehrere Polyole und
C) ein oder mehrere Trimerisierungskatalysatoren,
wobei das Verhältnis von Anzahl an Isocyanatgruppen zu Anzahl an OH-Gruppen zwischen 1,6 und 6,0 liegt und wobei der Trimerisierungskatalysator ein Salz eines tertiären Amins ist. Bevorzugt liegt das Verhältnis von Anzahl an Isocyanatgruppen zu Anzahl an OH-Gruppen zwischen 1,8 und 4,0 und besonders bevorzugt zwischen 2,1 und 3,5.

Trimerisierungkatalysatoren initiieren und beschleunigen die Trimerisierung von Isocyanatgruppen zu Isocyanuratgruppen.

Bevorzugt weist das Reaktionsgemisch keine Epoxidharze auf.

Das erfindungsgemäße Verbundbauteil weist bevorzugt auf einer der beiden Seiten der Polyisocyanurat enthaltenden Faserschicht eine sogenannte Distanzmaterialschicht und gegebenenfalls eine zusätzliche, zweite sich an die Distanzschicht anschließende, Polyisocyanurat enthaltende Faserschicht auf, die bevorzugt dasselbe Polyisocyanurat wie die erstgenannte Faserschicht aufweist.

Bevorzugte Faserverbundbauteile weisen auf der anderen der beiden Seiten der erstgenannten Polyisocyanurat enthaltenden Faserschicht eine oder mehrere Schutz- und/oder Dekorschichten auf. Bei den Schutzschichten handelt es sich bevorzugt um eine oder mehrere Gelcoatschichten, vorzugsweise aus Polyurethan(PUR)-, Epoxid-, ungesättigten Polyester- oder Vinylesterharzen.

Ein bevorzugtes Faserverbundbauteil weist auf der der Gelcoatschicht gegenüberliegenden Seite der Polyisocyanurat enthaltenden Faserschicht eine sogenannte Distanzschicht auf, worauf eine weitere Polyisocyanurat enthaltende Faserschicht folgt, die bevorzugt dasselbe Polyisocyanurat wie die erstgenannte Faserschicht aufweist. Beispielsweise besteht die Distanzschicht aus Balsaholz, PVC-Schaum, PET-Schaum oder PUR-Schaum. Die Distanzschicht kann vollflächig oder teilflächig auf der Faserschicht ausgebildet sein. Außerdem kann sie über die Fläche eine unterschiedliche Dicke aufweisen.

Besonders bevorzugt ist ein Faserverbundbauteil, welches in der Faserschicht ein Polyisocyanurat aufweist, das aus 60-90 Gew.-%, bevorzugt 65-85 Gew.-% Polyisocyanaten (A), 10-40 Gew.-%, bevorzugt 15-35 Gew.-% Polyolen (B), 0,01-2 Gew.-%, bevorzugt 0,1-1 Gew.-% Trimerisierungskatalysatoren (C), wobei die Summe der Gewichtsanteile der Komponenten 100 Gew.-% ergibt.

Der Faseranteil im Faserverbundteil beträgt vorzugsweise mehr als 50 Gew.-%, besonders bevorzugt mehr als 65 Gew.-%, bezogen auf das Gesamtgewicht des Faserverbundbauteils. Der Faseranteil kann bei Glasfasern beispielsweise durch Veraschung nachträglich bestimmt und die Einwaage kontrolliert werden.

Das Faserverbundbauteil, vorzugsweise das Glasfaserverbundbauteil, ist optisch transparent, damit das Bauteil auf Fehler (z.B. Lufteinschlüsse) optisch untersucht werden kann. Bevorzugt weist das Glasfaserverbundteil eine optische Transparenz gemäß ISO 13468-2 größer 20 %, besonders bevorzugt größer 60 %, ganz besonders bevorzugt größer 80 % auf.

Ein weiterer Gegenstand der Erfindung ist ein Verfahren zur Herstellung der erfindungsgemäßen Faserverbundbauteile, wobei
a) eine Mischung enthaltend
   A) ein oder mehrere Polyisocyanate
   B) ein oder mehrere Polyole und
   C) ein oder mehrere Trimerisierungskatalysatoren
   wobei das Verhältnis von Anzahl an Isocyanatgruppen zu Anzahl an OH-Gruppen zwischen 1,6 und 6,0 liegt und wobei der Trimerisierungskatalysator ein Salz eines tertiären Amins ist.
b) ein Fasermaterial in einer Werkzeughälfte vorgelegt wird,
c) die unter a) hergestellte Mischung in das Fasermaterial aus b) zur Herstellung eines getränkten Fasermaterials eingebracht wird,
d) das getränkte Fasermaterial bei einer Temperatur von 20 bis 120°C, bevorzugt von 70 bis 100°C, aushärtet.
Bevorzugt liegt das Verhältnis von Anzahl an Isocyanatgruppen zu Anzahl an OH-Gruppen zwischen 1,8 und 4,0 und besonders bevorzugt zwischen 2,1 und 3,5.

Bevorzugt weist die unter a) hergestellte Mischung keine Epoxidharze auf.

Vorzugsweise wird die Werkzeughälfte mit einem Trennmittel versehen, bevor das Fasermaterial eingebracht wird. Es können weitere Schutz- oder Dekor-Schichten vor dem Einbringen des Fasermaterials in die Werkzeughälfte eingetragen werden, wie beispielsweise eine oder mehrere Gelcoatschichten.

In einer bevorzugten Ausführungsform wird auf das Fasermaterial, das sich bereits in der Werkzeughälfte befindet, eine sogenannte Distanzschicht und darauf eine weitere Fasermaterialschicht, aus beispielsweise Fasermatten, Fasergewebe oder Fasergelege, aufgebracht. Anschließend wird die Polyisocyanuratmischung in die Schichten gegossen. Die Distanzschicht besteht beispielsweise aus Balsaholz, Polyvinylchlorid(PVC)-Schaum, Polyethylenterephthalat(PET)-Schaum oder Polyurethan(PUR)-Schaum.

Vorzugsweise wird nach dem Einlegen des Fasermaterials in die Werkzeughälfte eine Folie auf das Fasermaterial gelegt, Vakuum zwischen der Folie und der Werkzeughälfte erzeugt und durch die Folie die Reaktionsmischung eingetragen (Vacuum Assisted Resin Transfer Molding (VARTM)). Durch dieses Verfahren lassen sich auch große Bauteile wie Rotorblätter von Windkraftanlagen herstellen. Falls erforderlich können zwischen der Folie und dem Fasermaterial noch sogenannte Fließhilfen (z.B. in Form von druckstabilen, aber harzdurchlässigen Matten) eingebracht werden, die nach der Aushärtung wieder entfernt werden können.

Beim ebenfalls bevorzugten RTM-Verfahren (Resin Transfer Molding) wird anstelle der vakuumfesten Folie mit einem Werkzeuggegenstück die Form geschlossen und die Harzmischung gegebenenfalls unter Druck in die Form gegeben.

Die erfindungsgemäß eingesetzten Reaktionsharzmischungen haben niedrige Viskositäten, lange Verarbeitungszeiten und weisen kurze Aushärtezeiten bei niedrigen Aushärtetemperaturen auf und ermöglichen so die schnelle Fertigung von Faserverbundbauteilen.

Ein weiterer Vorteil der erfindungsgemäß eingesetzten Reaktionsharzmischungen ist das verbesserte Verarbeitungsverhalten. Die Reaktionsharzmischungen können bei niedrigen Temperaturen hergestellt und verarbeitet werden. Dies führt zu einer langsamen Aushärtung der Komponenten. Die Komponenten der Reaktionsharzmischungen können bei 20 bis 50 °C, bevorzugt bei 30 bis 40 °C, gemischt und auf das Fasermaterial aufgetragen werden.

Um eine gute Tränkung der Fasern zu gewährleisten, sollte die Reaktionsharzmischung beim Einfüllen vorzugsweise dünnflüssig sein und möglichst lange dünnflüssig bleiben. Dies ist besonders bei großen Bauteilen nötig, da hier die Füllzeit sehr lang ist (beispielsweise bis zu einer Stunde). Vorzugsweise liegt die Viskosität der erfindungsgemäßen Reaktionsharzmischung bei 25°C direkt nach dem Vermischen zwischen 10 und 300 mPas, bevorzugt zwischen 20 und 80 mPas, besonders bevorzugt zwischen 30 und 50 mPas. Bevorzugt ist die Viskosität der erfindungsgemäßen Reaktionsharzmischung bei einer konstanten Temperatur von 25°C 30 Minuten nach dem Vermischen der Komponenten kleiner als 1000 mPas, besonders bevorzugt kleiner 500 mPas. Die Viskosität wurde 30 Minuten nach dem Vermischen der Komponenten bei einer konstanten Temperatur von 25 °C mit einem Rotationsviskosimeter bei einer Scherrate von 60 1/s bestimmt.

Die erfindungsgemäß eingesetzte Reaktionsmischung kann auf Gießmaschinen mit Statikmischern oder mit dynamischen Mischern verarbeitet werden, da nur eine kurze Mischzeit benötigt wird. Dies ist bei der Herstellung der erfindungsgemäßen Faserverbundbauteile von großem Vorteil, da die Reaktivharzmischung für eine gute Tränkung möglichst dünnflüssig sein muss.

Als Polyisocyanatkomponente A) kommen die üblichen aliphatischen, cycloaliphatischen und insbesondere aromatischen Di- und/oder Polyisocyanate zum Einsatz. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (pMDI), 1,3- und/oder 1,4-Bis-(2-isocyanato-prop-2-yl)-benzol (TMXDI), 1,3-Bis-(isocyanatomethyl)benzol (XDI). Neben den vorstehend genannten Polyisocyanaten können anteilig auch modifizierte Polyisocyanate mit Uretdion-, Isocyanurat-, Urethan-, Carbodiimid-, Uretonimin-, Allophanat- oder Biuretstruktur eingesetzt werden. Als Isocyanat wird vorzugsweise Diphenylmethandiisocyanat (MDI) und insbesondere Gemische aus Diphenylmethandiisocyanat und Polyphenylenpolymethylenpolyisocyanat (pMDI) verwendet. Die Gemische aus Diphenylmethandiisocyanat und Polyphenylenpolymethylenpolyisocyanat (pMDI) haben einen bevorzugten Monomergehalt von zwischen 60 und 100 Gew.-%, bevorzugt zwischen 70 und 95 Gew.-%, besonders bevorzugt zwischen 80 und 90 Gew.-%. Der NCO-Gehalt des verwendeten Polyisocyanates sollte vorzugsweise über 25 Gew.-%, bevorzugt über 30 Gew.-%, besonders bevorzugt über 32 Gew.% liegen. Der NCO-Gehalt kann nach DIN 53185 bestimmt werden. Die Viskosität des Isocyanates sollte vorzugsweise ≤ 150 mPas (bei 25°C), bevorzugt ≤ 50 mPas (bei 25°C) und besonders bevorzugt von ≤ 30 mPas (bei 25°C) sein.

Die OH-Zahl der Komponente B) gibt im Falle eines einzelnen zugesetzten Polyols dessen OH-Zahl an. Im Falle von Mischungen wird die zahlenmittlere OH-Zahl angegeben. Dieser Wert kann anhand von DIN 53240-2 bestimmt werden. Die Polyolformulierung enthält vorzugsweise als Polyole solche, die eine zahlenmittlere OH-Zahl von 100 bis 1000 mg KOH/g, bevorzugt von 300 bis 600 mg KOH/g und besonders bevorzugt von 350 bis 500 mg KOH/g aufweisen. Die Viskosität der Polyole ist vorzugsweise ≤ 800 mPas (bei 25°C). Vorzugsweise haben die Polyole mindestens 60 % sekundäre OH-Gruppen, bevorzugt mindestens 80 % sekundäre OH-Gruppen und besonders bevorzugt mindestens 90 % sekundäre OH-Gruppen. Polyetherpolyole auf Basis Propylenoxid sind besonders bevorzugt. Bevorzugt haben die eingesetzten Polyole eine mittlere Funktionalität von 2,0 bis 5,0, besonders bevorzugt 2,5 bis 3,5.

Erfindungsgemäß können Polyetherpolyole, Polyesterpolyole oder Polycarbonatpolyole eingesetzt werden, bevorzugt sind Polyetherpolyole. Erfindungsgemäß verwendbare Polyetherpolyole sind beispielsweise Polytetramethylenglykolpolyether, wie sie durch Polymerisation von Tetrahydrofuran mittels kationischer Ringöffnung erhältlich sind. Ebenfalls geeignete Polyetherpolyole sind Additionsprodukte von Styroloxid, Ethylenoxid, Propylenoxid und/oder Butylenoxide an di- oder polyfunktionelle Startermoleküle. Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren oder Hydroxylgruppen aufweisende Öle. Bevorzugt ist Glyzerin als Starter. Die Viskosität der Polyole ist vorzugsweise ≤ 800 mPas (bei 25°C). Vorzugsweise haben die Polyole mindestens 60 % sekundäre OH-Gruppen, bevorzugt mindestens 80 % sekundäre OH-Gruppen und besonders bevorzugt 90 % sekundäre OH-Gruppen. Polyetherpolyole auf Basis Propylenoxid sind besonders bevorzugt.

Die Polyole B) können auch Fasern, Füllstoffe und Polymere enthalten.

Als Trimerisierungskatalysatoren werden.

Salze von tertiären Aminen eingesetzt. Diese latent-reaktiven Trimerisierungskatalysatoren lassen sich beispielsweise durch chemische Blockierung eines katalytisch aktiven Amins erhalten. Die chemische Blockierung kann durch die Protonierung eines tertiären Amins mit einer Säure wie zum Beispiel Ameisensäure, Essigsäure, Ethylhexansäure oder Ölsäure oder eines Phenols erfolgen. Trialkylamine und heterozyklische Amine können als Amin verwendet werden, beispielsweise Trimethylamin, Triethylamin, Tripropylamin, Tributylamin, Dimethylcyclohexylamin, Dimethylbenzylamin, Dibutylcyclohexylamin, Dimethylethanolamin, Triethanolamin, Diethylethanolamin, Ethyldiethanolamin, Dimethylisopropanolamin, Triisopropanolamin, Triethylenediamin, Tetramethyl-1,3-butandiamin, N,N,N',N'-Tetramethylethylendiamin, N,N,N',N'-Tetramethylhexandiamin-1,6, N,N,N',N',N"-Pentamethyldiethylentriamin, Bis(2-dimethylaminoethoxy)-methan, N,N,N'-Trimethyl-N'-(2-hydroxyethyl)-ethylendiamin, N,N-Dimethyl-N',N'-(2-hydroxyethyl)-ethylendiamin, Tetramethylguanidin, N-Methylpiperidin, N-Ethylpiperidin, N-Methylmorpholin, N-Ethylmorpholin, 1,4-Dimethylpiperidin, 1,2,4-Trimethylpiperidin, N-(2-Dimethylaminoethyl)-morpholin, 1-Methyl-4-(2-dimethylamino)-piperidin, 1,4-Diazabicyclo[2.2.2]oktan, 1,8-Diazabicyclo[5.4.0]undec-7-en, und 1,5-diazabicyclo[4.3.0]-5-nonan. Besonders bevorzugt ist 1,8-Diazabicyclo[5.4.0]undec-7-en.

Besonders bevorzugte Trimerisierungskatalysatoren sind Amine ausgewählt aus der Gruppe bestehend aus Trimethylamin, Triethylamin, Tripropylamin, Tributylamin, Dimethylcyclohexylamin, Dimethylbenzylamin, Dibutylcyclohexylamin, Dimethylethanolamin, Triethanolamin, Diethylethanolamin, Ethyldiethanolamin, Dimethylisopropanolamin, Triisopropanolamin, Triethylenediamin, Tetramethyl-1,3-butandiamin, N,N,N',N'-Tetramethylethylendiamin, N,N,N',N'-Tetramethylhexandiamin-1,6, N,N,N',N',N"-Pentamethyldiethylentriamin, Bis(2-dimethylaminoethoxy)-methan, N,N,N'-Trimethyl-N'-(2-hydroxyethyl)-ethylendiamin, N,N-Dimethyl-N',N'-(2-hydroxyethyl)-ethylendiamin, Tetramethylguanidin, N-Methylpiperidin, N-Ethylpiperidin, N-Methylmorpholin, N-Ethylmorpholin, 1,4-Dimethylpiperidin, 1,2,4-Trimethylpiperidin, N-(2-Dimethylaminoethyl)-morpholin, 1-Methyl-4-(2-dimethylamino)-piperidin, 1,4-Diazabicyclo[2.2.2]oktan, 1,8-Diazabicyclo[5.4.0]undec-7-en, und 1,5-diazabicyclo[4.3.0]-5-nonan, die jeweils als Phenolatsalz, Ethylhexoatsalz, Oleatsalz, Acetatsalz oder Formiatsalz vorliegen.

Beispiele für kommerziell verfügbare latent-reaktive Trimerisierungskatalysatoren sind das Polycat® SA1/10 (Phenol-blockiertes 1,8-Diazabicyclo[5.4.0]undec-7-en (=DBU)), Polycat® SA 102/10, DABCO® 8154 (Ameisensäure-blockiertes Triethylendiamin) oder DABCO® WT.

Besonders bevorzugt als Trimerisierungskatalysator ist 1,8-Diazabicyclo[5.4.0]undec-7-en, das als Phenolatsalz, Ethylhexoatsalz, Oleatsalz, Acetatsalz oder Formiatsalz vorliegt.

Überraschenderweise wurde gefunden, dass diese latent-reaktiven Polyurethan(PUR)-Katalysatoren auch die Bildung von Polyisocyanuraten (PIR) bei erhöhter Temperatur katalysieren. Dies ermöglicht die Herstellung von großen Faserverbundbauteilen, da bei der Fülltemperatur die Polyisocyanuratbildung noch nicht auftritt und die mit Fasern gefüllten Formen durch die niedrige Viskosität schnell getränkt werden können und erst bei der späteren Temperung die Aushärtung erfolgt.

Ein weiterer Gegenstand der Erfindung sind Faserverbundbauteile enthaltend eine Faserschicht, die mit Polyisocyanurat getränkt ist, wobei das Polyisocyanurat aus einem Reaktionsgemisch erhältlich ist umfassend
A) ein oder mehrere Polyisocyanate
B) ein oder mehrere Polyole und
C) ein oder mehrere Trimerisierungskatalysatoren,
wobei das Verhältnis von Anzahl an Isocyanatgruppen zu Anzahl an OH-Gruppen zwischen 1,6 und 6,0 liegt.

Gegebenenfalls können Additive D) zugesetzt werden. Hierbei handelt es sich beispielsweise um Entlüfter, Entschäumer, Füllstoffe, Flammschutzmittel und Verstärkungsstoffe. Weitere bekannte Additive und Zusatzmittel können bei Bedarf verwendet werden.

Zur Verbesserung der Brandbeständigkeit können den schäumbaren Zubereitungen zudem Flammschutzmittel zugesetzt werden, z.B. phosphorhaltige Verbindungen, vor allem Phosphate und Phosphonate, sowie auch halogenierte Polyester und Polyole oder Chlorparaffine. Ferner können auch nicht-flüchtige Flammschutzmittel wie Melamin oder expandierbarer Graphit (Blähgraphit) zugesetzt werden, welches sich unter Flammeinwirkung stark ausdehnt und dabei die Oberfläche vor weiterer Hitzeeinwirkung versiegelt.

Als Fasermaterial können beschlichtete oder unbeschlichtete Fasern, beispielsweise Glasfasern, Kohlefasern, Stahl- bzw. Eisenfasern, Naturfasern, Aramidfasern, Polyethylenfasern oder Basaltfasern eingesetzt werden. Besonders bevorzugt sind Glasfasern. Die Fasern können als Kurzfasern mit einer Länge von 0,4 bis 50 mm verwendet werden. Bevorzugt sind endlosfaserverstärkte Verbundbauteile durch den Einsatz von kontinuierlichen Fasern. Die Fasern in der Faserschicht können unidirektional, regellos verteilt oder verwoben angeordnet sein. In Bauteilen mit einer Faserschicht aus mehreren Lagen besteht die Möglichkeit der Faserorientierung von Lage zu Lage. Hierbei kann man unidirektionale Faserschichten, Kreuzverbundschichten oder multidirektionale Faserschichten herstellen, wobei unidirektionale oder verwebte Lagen übereinander geschichtet werden. Besonders bevorzugt werden Faser-Halbzeuge als Fasermaterial, wie beispielsweise Gewebe, Gelege, Geflechte, Matten, Vliese, Gestricke und Gewirke oder 3D-Faser-Halbzeuge, eingesetzt.

Das erhaltene Polyisocyanurat hat vorzugsweise einen PIR-Umsatz von über 20 %, bevorzugt über 40 % und besonders bevorzugt über 60 %. Der PIR-Umsatz ist der Anteil an Isocyanatgruppen, der zu PIR reagiert hat. Er kann durch Infrarot-Spektroskopie nachgewiesen werden.

Das erhaltene Polyisocyanurat hat vorzugsweise eine Festigkeit im Zugversuch nach DIN EN ISO 527 von über 70 MPa, bevorzugt über 80 MPa, um den hohen mechanischen Beanspruchungen in Bauteilen wie beispielsweise einem Rotorblatt standzuhalten.

Das erhaltene Polyisocyanurat hat vorzugsweise eine E-Modul im Zugversuch nach DIN EN ISO 527 von über 2700 MPa, bevorzugt über 2900 MPa, um den hohen mechanischen Beanspruchungen in Bauteilen wie beispielsweise einem Rotorblatt standzuhalten.

Das erhaltene Polyisocyanurat hat vorzugsweise eine Wärmeformbeständigkeit (HDT) nach DIN EN ISO 75 - 1/75 2004, Methode A mit einer Biegespannung von 1,8 N/mm² von über 70 °C, bevorzugt über 75°C und besonders bevorzugt über 80 °C um den hohen Temperaturbelastungen in Bauteilen standzuhalten.

Die erfindungsgemäßen Faserverbundbauteile können zur Herstellung von Rotorblättern von Windkraftanlagen, zur Herstellung von Karosseriebauteilen von Automobilen oder im Flugzeugbau, in Bauteilen des Gebäude- bzw. Straßenbaus (z.B. Kanaldeckel) und sonstigen hochbelasteten Strukturen verwendet werden.

Die Erfindung soll anhand der nachfolgenden Beispiele näher erläutert werden.

### Beispiele

Um die Matrixeigenschaften zu bestimmen, wurden Formkörper (Platten) aus verschiedenen Polyisocyanurat- und Polyurethansystemen hergestellt und verglichen. Die Polyolmischungen, die den Trimerisierungskatalysator enthalten, wurden bei einem Druck von 1 mbar für 60 Minuten entgast und danach mit dem Isocyanat versetzt. Diese Abmischung wurde für ca. 5 Minuten bei einem Druck von 1 mbar entgast und danach in Plattenformen gegossen. Die Platten wurden bei Raumtemperatur gegossen und über Nacht in einem auf 80 °C geheizten Trockenschrank getempert. Die Dicke der Platten war 4 mm. Man erhielt optisch transparente Platten. Die Mengenangaben und Eigenschaften sind der Tabelle zu entnehmen.

Aus den Platten wurden Probenkörper für einen Zugversuch nach DIN EN ISO 527 hergestellt und der E-Modul und die Festigkeit bestimmt.

Die Wärmeformbeständigkeit (Heat Deflection Temperature - HDT) wurde nach DIN EN ISO 75 1/75 2004 - Methode A mit einer Biegespannung von 1,8 N/mm² und einer Aufheizrate von 120 K/h bestimmt.

Mit der Zusammensetzung aus Beispiel 1 bis 4 wurden optisch transparente, glasfaserverstärkte Polyisocyanuratwerkstoffe durch das Vakuuminfusionsverfahren mit einem Glasfasergehalt von über 60 Gew.-% hergestellt werden. Dazu wurden vier Lagen eines UD-Glasgeleges mit einem Glasflächengewicht von 1040 g/m² je Lage auf ein Werkzeug gegeben, mit einer Vakuumfolie abgedichtet und evakuiert. Dann wurde die Zusammensetzung aus Beispiel 1 bis 4, die vorab für ca. 5 Minuten entgast wurde, eingesogen. Nachdem die Form gefüllt war, wurde das Bauteil bei 80 °C über Nacht getempert.

Die Viskosität wurde 30 Minuten nach dem Vermischen der Komponenten bei einer konstanten Temperatur von 25 °C mit einem Rotationsviskosimeter bei einer Scherrate von 60 1/s bestimmt.

### Ausgangsverbindungen:

Polyol1: Glyzerin gestartetes Polypropylenoxidpolyol mit einer Funktionalität von 3 und einer OH-Zahl von 400 mg KOH/g und einer Viskosität von 375 mPas (bei 25°C).
Polyol2: Glyzerin gestartetes Polypropylenoxidpolyol mit einer Funktionalität von 3 und einer OH-Zahl von 450 mg KOH/g und einer Viskosität von 420 mPas (bei 25°C).
Polycat® SA 1/10: Produkt der Firma Air Products. Phenolsalz von 1,8-Diazabicyclo[5.4.0]undec-7-en in Dipropylenglykol. Die OH-Zahl betrug 83 mg KOH/g.
Isocyanat1: Gemisch von Diphenylmethan-4,4'-diisocyanat (MDI) mit Isomeren und höherfunktionellen Homologen mit einem NCO-Gehalt von 32,5 Gew.-%; Viskosität bei 25°C: 20 mPas. Die Mischung enthält ca. 51 Gew.-% Diphenylmethan-4,4'-diisocyanat, 30 Gew.-% Diphenylmethan-2,4'-diisocyanat, 6 Gew.-% Diphenylmethan-2,2'-diisocyanat und 13 Gew.-% höherfunktionelle Homologe von MDI.
Isocyanat2: Gemisch von Diphenylmethan-4,4'-diisocyanat (MDI) mit Isomeren und höherfunktionellen Homologen mit einem NCO-Gehalt von 32,6 Gew.-%; Viskosität bei 25°C: 20 mPas. Die Mischung enthält ca. 60 Gew.-% Diphenylmethan-4,4'-diisocyanat, 22 Gew.-% Diphenylmethan-2,4'-diisocyanat, 3 Gew.-% Diphenylmethan-2,2'-diisocyanat und 15 Gew.-% höherfunktionelle Homologe von MDI.

Alle Mengenangaben in der folgenden Tabelle sind in Gewichtsteilen.

**Tabelle:**

| | Beispiel 1 | Beispiel 2 | Beispiel3 | Beispiel 4 | Vergleichsbeispiels | Vergleichsbeispiel6 |
|---|---|---|---|---|---|---|
| Polyol1 | 100 | 118 | 130 | 98 | 200 | - |
| Polyol2 | - | - | - | - | - | 200 |
| Polycat SA1/10 | 2 | 2 | 2 | 2 | - | - |
| Isocyanat1 | 300 | 280 | 268 | - | - | - |
| Isocyanat2 | - | - | - | 300 | 202 | 227 |
| Molares Verhältnis NCO/OH | 3,2 | 2,6 | 2,2 | 3,3 | 1,1 | 1,1 |
| | | | | | | |
| Viskosität direkt nach dem Vermischen bei 25°C [mPas] | 34 | 45 | 49 | 49 | 112 | 122 |
| Viskosität 30 min. nach dem Vermischen bei 25°C [mPas] | 173 | 352 | 461 | 625 | 504 | 716 |
| Zugversuch: E-Modul [MPa] | 2966 | 2773 | 2819 | 2981 | 2936 | 3038 |
| Zugversuch: Festigkeit [MPa] | 80,9 | 83,7 | 83,5 | 79,7 | 72,9 | 80,3 |
| HDT [°C] | 78 | 89 | 81 | 77 | 66 | 73 |

Die erfindungsgemäßen Beispiele 1 bis 4 ergeben kompakte und optisch transparente Formteile, die sehr gute mechanische Eigenschaften wie einem E-Modul von über 2700 MPa, einer Festigkeit von über 75 MPa und einem HDT-Wert von über 75 °C vereinen. Für die Herstellung von faserverstärkten Bauteilen ist vor allem eine sehr niedrige Viskosität nötig, da dadurch die Formen deutlich schneller und gleichmäßiger gefüllt werden können. Dies ermöglich kürzere Zykluszeiten, die die Formen nur kürzer belegt werden müssen. Der verwendete latent-reaktive Trimerisierungskatalysator führt zu einer sehr schnellen Aushärtung bei 80 °C.

Die Vergleichsbeispiele 5 und 6 wurden mit einem molaren Verhältnis NCO/OH von 1,1 hergestellt. Da die Reaktion mit Trimerisierungskatalysator schon zu schnell war, wurde hier ohne Trimerisierungskatalysator gearbeitet werden. Mit Trimerisierungskatalysator liegt die Viskosität 30 Minuten nach dem Vermischen bei 25 °C bei 3320 mPas (0,5 Gew.-Teile Polycat SA1/10 auf 100 Teile Polyol + Isocyanat) für Vergleichsbeispiel 5 und bei 5980 mPas (0,5 Gew.-Teile auf 100 Teile Polyol und Isocyanat) für Vergleichsbeispiel 6. Die latent-reaktiven Trimerisierungskatalysatoren wirken zwar vor allem bei erhöhten Temperaturen und führen so zu einer schnellen Aushärtung der Probe bei dem späteren Tempervorgang, aber sie katalysieren auch bereits bei 25 °C die Polyurethanreaktion in geringem Maße. Dieser Effekt ist aber bei den erfindungsgemäßen Beispielen 1 bis 4 deutlich geringer, da die spätere Vernetzung durch die Polyisocyanuratreaktion erfolgt. Obwohl bei Vergleichsbeispiel 5 und 6 ohne Trimerisierungskatalysator gearbeitet wurde, ist der Viskositätsanstieg nach 30 Minuten relativ hoch und vor allem die Anfangsviskosität ist deutlich höher als in den Beispielen 1 bis 4. Da der Füllvorgang länger dauert, steigt die Zykluszeit deutlich an und die einzelne Form wird länger benutzt, was zu deutlich höheren Kosten führt. Außerdem ist die Benetzung der Fasern bei einer höheren Viskosität schwieriger.

In Vergleichsbeispiel 6 wurde die OH-Zahl des Polyols erhöht um die mechanischen Kennwerte des PUR-Systems weiter zu erhöhen. Dies erfolgt aber auf Kosten einer erhöhten Viskosität und einem erhöhten Viskositätsanstieg.

Die sehr guten mechanischen Kennwerte und ein HDT von über 75 °C in Kombination mit einer sehr niedrigen Anfangsviskosität von kleiner 50 mPas, was zu einer hohen Produktivität bei der Herstellung von großen faserverstärkten Bauteilen führt, wurde nur mit den erfindungsgemäßen Beispielen erreicht.

Für die Bestimmung der Flammwidrigkeit wurde die vertikale Flammenausbreitung bei Kantenbeflammung mit einem Kleinbrennertest in Anlehnung an DIN 53438-2 bestimmt. Bei Beispiel 1 trat Selbstverlöschung bereits 5 Sekunden nach Flammentzug auf und die Flammhöhe war max. 70 mm. Im Gegensatz dazu zeigte sich bei Vergleichsbeispiel 6 keine Selbstverlöschung und die Flammhöhe war größer als 150 mm, damit ist der Test nicht bestanden.

Die Flammwidrigkeit wurde durch die Bildung von Polyisocyanuraten deutlich verbessert. Die Flammwidrigkeit ist bei vielen Faserverbundbauteilen eine entscheidende Eigenschaft, da sie die Sicherheit der Endanwendung (z.B. eines Rotorblattes, eines Karosserieteiles) erhöht.

## Patentansprüche

1. Faserverbundbauteile enthaltend eine Polyisocyanurat aufweisende Faserschicht, wobei das Polyisocyanurat aus einem Reaktionsgemisch erhältlich ist umfassend
A) ein oder mehrere Polyisocyanate
B) ein oder mehrere Polyole und
C) ein oder mehrere Trimerisierungskatalysatoren,
wobei das Verhältnis von Anzahl an Isocyanatgruppen zu Anzahl an OH-Gruppen zwischen 1,6 und 6,0 liegt und
wobei der Trimerisierungskatalysator ein Salz eines tertiären Amins ist..

2. Faserverbundbauteil gemäß Anspruch 1, wobei als Katalysator C) ein latent-reaktiver Trimerisierungskatalysator eingesetzt wird.

3. Faserverbundteil gemäß Anspruch 1, wobei das tertiäre Amin ausgewählt wird aus der Gruppe bestehend aus Trimethylamin, Triethylamin, Tripropylamin, Tributylamin, Dimethylcyclohexylamin, Dimethylbenzylamin, Dibutylcyclohexylamin, Dimethylethanolamin, Triethanolamin, Diethylethanolamin, Ethyldiethanolamin, Dimethylisopropanolamin, Triisopropanolamin, Triethylenediamin, Tetramethyl-1,3-butandiamin, N,N,N',N'-Tetramethylethylendiamin, N,N,N',N'-Tetramethylhexandiamin-1,6, N,N,N',N',N"-Pentamethyldiethylentriamin, Bis(2-dimethylaminoethoxy)-methan, N,N,N'-Trimethyl-N'-(2-hydroxyethyl)-ethylendiamin, N,N-Dimethyl-N',N'-(2-hydroxyethyl)-ethylendiamin, Tetramethylguanidin, N-Methylpiperidin, N-Ethylpiperidin, N-Methylmorpholin, N-Ethylmorpholin, 1,4-Dimethylpiperidin, 1,2,4-Trimethylpiperidin, N-(2-Dimethylaminoethyl)-morpholin, 1-Methyl-4-(2-dimethylamino)-piperidin, 1,4-Diazabicyclo[2.2.2]oktan, 1,8-Diazabicyclo[5.4.0]undec-7-en, und 1,5-diazabicyclo[4.3.0]-5-nonan.

4. Faserverbundteil gemäß Anspruch 1, wobei das Salz ausgewählt wird aus der Gruppe bestehend aus Phenolaten, Ethylhexoaten, Oleaten, Acetaten und Formiaten.

5. Faserverbundbauteil gemäß Anspruch 1, wobei auf einer Seite der Polyisocyanurat enthaltenden Faserschicht eine oder mehrere Gelcoatschichten vorhanden sind.

6. Faserverbundbauteil gemäß Anspruch 5, wobei auf der der Gelcoatschicht gegenüberliegenden Seite der Polyisocyanurat enthaltenden Faserschicht eine Distanzschicht vorhanden ist, worauf eine weitere Polyisocyanurat enthaltende Faserschicht folgt.

7. Faserverbundbauteil gemäß Anspruch 1, wobei auf einer Seite der Polyisocyanurat enthaltenden Faserschicht eine Distanzschicht vorhanden ist, worauf eine weitere Polyisocyanurat enthaltende Faserschicht folgt.

8. Verfahren zur Herstellung der Faserverbundbauteile gemäß Anspruch 1, wobei
a) eine Mischung enthaltend
A) ein oder mehrere Polyisocyanate
B) ein oder mehrere Polyole und
C) ein oder mehrere Trimerisierungskatalysatoren,
wobei das Verhältnis von Anzahl an Isocyanatgruppen zu Anzahl an OH-Gruppen zwischen 1,6 und 6,0 liegt, hergestellt wird,
b) ein Fasermaterial in einer Werkzeughälfte vorgelegt wird,
c) die unter a) hergestellte Mischung in das Fasermaterial aus b) zur Herstellung eines getränkten Fasermaterials eingebracht wird,
d) das getränkte Fasermaterial bei einer Temperatur von 20 bis 120°C, bevorzugt von 70 bis 100°C, aushärtet.

9. Verfahren gemäß Anspruch 8, wobei vor dem Schritt b)
b') eine oder mehrere Gelcoatschichten in die Werkzeughälfte eingebracht werden.

10. Verfahren gemäß Anspruch 8 oder 9, wobei nach dem Schritt b) oder b') und vor dem Schritt c) in die Werkzeughälfte eine Distanzmaterialschicht und danach eine Fasermaterialschicht eingebracht werden.

11. Verfahren gemäß Anspruch 8, wobei Schritt c) im Vakuuminfusionsverfahren durchgeführt wird.

12. Verwendung der Faserverbundbauteile gemäß einem der Ansprüche 1 bis 7 zur Herstellung von Rotorblättern von Windkraftanlagen, zur Herstellung von Karosseriebauteilen von Automobilen oder im Flugzeugbau, in Bauteilen des Gebäude- bzw. Straßenbaus (z.B. Kanaldeckel) und sonstigen hochbelasteten Strukturen.

## Claims

1. Fiber composite component comprising a polyisocyanurate-containing fiber layer, where the polyisocyanurate is obtainable from a reaction mixture comprising
A) one or more polyisocyanates
B) one or more polyols, and
C) one or more trimerization catalysts,
where the ratio of number of isocyanate groups to number of OH groups is from 1.6 to 6.0, and where the trimerization catalyst is a salt of a tertiary amine.

2. Fiber composite component according to Claim 1, where a latently reactive trimerization catalyst is used as catalyst C).

3. Fiber composite part according to Claim 1, where the tertiary amine is selected from the group consisting of trimethylamine, triethylamine, tripropylamine, tributylamine, dimethylcyclohexyl-amine, dimethylbenzylamine, dibutylcyclohexylamine, dimethylethanolamine, triethanolamine, diethylethanolamine, ethyldiethanolamine, dimethylisopropanolamine, triisopropanolamine, triethylenediamine, tetramethyl-1,3-butanediamine, N,N,N',N'-tetramethylethylenediamine, N,N,N',N'-tetramethylhexane-1,6-diamine, N,N,N',N',N"-pentamethyldiethylenetriamine, bis(2-dimethylaminoethoxy)methane, N,N,N'-trimethyl-N'-(2-hydroxyethyl)ethylenediamine, N,N-dimethyl-N',N'-(2-hydroxyethyl)ethylenediamine, tetramethylguanidine, N-methylpiperidine, N-ethylpiperidine, N-methylmorpholine, N-ethylmorpholine, 1,4-dimethylpiperidine, 1,2,4-trimethylpiperidine, N-(2-dimethylaminoethyl) morpholine, 1-methyl-4-(2-dimethylamino)piperidine, 1,4-diaza bicyclo[2.2.2]octane, 1,8-diazabicyclo[5.4.0]undec-7-ene, and 1,5-diazabicyclo[4.3.0]-5-nonane.

4. Fiber composite part according to Claim 1, where the salt is selected from the group consisting of phenolates, ethylhexoates, oleates, acetates, and formates.

5. Fiber composite component according to Claim 1, where there are one or more gelcoat layers present on one side of the polyisocyanurate-containing fiber layer.

6. Fiber composite component according to Claim 5, where on that side of the polyisocyanurate-containing fiber layer that is opposite to the gelcoat layer there is a spacer layer present, which is followed by another polyisocyanurate-containing fiber layer.

7. Fiber composite component according to Claim 1, where there is, on one side of the polyisocyanurate-containing fiber layer, a spacer layer which is followed by another polyisocyanurate-containing fiber layer.

8. Process for the production of the fiber composite components according to Claim 1, where
a) a mixture is produced comprising
A) one or more polyisocyanates
B) one or more polyols, and
C) one or more trimerization catalysts,
where the ratio of number of isocyanate groups to number of OH groups is from 1.6 to 6.0,
b) a fiber material is used as initial charge in a mold half,
c) the mixture produced in a) is introduced into the fiber material of b) for the production of a saturated fiber material,
d) the saturated fiber material hardens at a temperature of from 20 to 120°C, preferably from 70 to 100°C.

9. Process according to Claim 8, where before the step b)
b') one or more gelcoat layers are introduced into the mold half.

10. Process according to Claim 8 or 9, where after the step b) or b') and before the step c) a spacer-material layer and then a fiber-material layer are introduced into the mold half.

11. Process according to Claim 8, where step c) is carried out by the vacuum infusion process.

12. Use of the fiber composite components according to any of Claims 1 to 7 for the production of rotor blades of wind turbines, for the production of bodywork components of automobiles or in aircraft construction, in components used to construct in the construction of buildings or of roads (e.g. manhole cover), and in other structures subject to high loads.

## Revendications

1. Composants composites fibreux contenant une couche de fibres comprenant du polyisocyanurate, le polyisocyanurate pouvant être obtenu à partir d'un mélange réactionnel comprenant :
A) un ou plusieurs polyisocyanates,
B) un ou plusieurs polyols et
C) un ou plusieurs catalyseurs de trimérisation,
le rapport entre le nombre de groupes isocyanate et le nombre de groupes OH étant compris entre 1,6 et 6,0, et le catalyseur de trimérisation étant un sel d'une amine tertiaire.

2. Composant composite fibreux selon la revendication 1, dans lequel un catalyseur de trimérisation réactif latent est utilisé en tant que catalyseur C).

3. Composant composite fibreux selon la revendication 1, dans lequel l'amine tertiaire est choisie dans le groupe constitué par la triméthylamine, la triéthylamine, la tripropylamine, la tributylamine, le diméthylcyclohexylamine, la diméthylbenzylamine, la dibutylcyclohexylamine, la diméthyléthanolamine, la triéthanolamine, la diéthyléthanolamine, l'éthyldiéthanolamine, la diméthylisopropanolamine, la triisopropanolamine, la triéthylène-diamine, la tétraméthyl-1,3-butane-diamine, la N,N,N',N'-tétraméthyléthylène-diamine, la N,N,N',N'-tétraméthylhexane-diamine-1,6, la N,N,N',N',N"-pentaméthyldiéthylène-triamine, le bis(2-diméthylaminoéthoxy)-méthane, la N,N,N'-triméthyl-N'-(2-hydroxyéthyl)-éthylène-diamine, la N,N-diméthyl-N',N'-(2-hydroxyéthyl)-éthylène-diamine, la tétraméthylguanidine, la N-méthylpipéridine, la N-éthylpipéridine, la N-méthylmorpholine, la N-éthylmorpholine, la 1,4-diméthylpipéridine, la 1,2,4-triméthylpipéridine, la N-(2-diméthylaminoéthyl)-morpholine, la 1-méthyl-4-(2-diméthylamino)-pipéridine, le 1,4-diazabicyclo[2.2.2]octane, le 1,8-diazabicyclo[5.4.0]undéc-7-ène et le 1,5-diazabicyclo[4.3.0]-5-nonane.

4. Composant composite fibreux selon la revendication 1, dans lequel le sel est choisi dans le groupe constitué par les phénolates, les éthylhexoates, les oléates, les acétates et les formiates.

5. Composant composite fibreux selon la revendication 1, dans lequel une ou plusieurs couches de gel sont présentes sur un côté de la couche de fibres contenant du polyisocyanurate.

6. Composant composite fibreux selon la revendication 5, dans lequel une couche d'espacement est présente sur le côté opposé à la couche de gel de la couche de fibres contenant du polyisocyanurate, qui est suivie par une autre couche de fibres contenant du polyisocyanurate.

7. Composant composite fibreux selon la revendication 1, dans lequel une couche d'espacement est présente sur un côté de la couche de fibres contenant du polyisocyanurate, qui est suivie par une autre couche de fibres contenant du polyisocyanurate.

8. Procédé de fabrication des composants composites fibreux selon la revendication 1, dans lequel
a) un mélange contenant
A) un ou plusieurs polyisocyanates,
B) un ou plusieurs polyols et
C) un ou plusieurs catalyseurs de trimérisation,
le rapport entre le nombre de groupes isocyanate et le nombre de groupes OH étant compris entre 1,6 et 6,0, est fabriqué,
b) un matériau fibreux est placé dans une moitié de moule,
c) le mélange fabriqué en a) est introduit dans le matériau fibreux de b) pour la fabrication d'un matériau fibreux imprégné,
d) le matériau fibreux imprégné est durci à une température de 20 à 120 °C, de préférence de 70 à 100 °C.

9. Procédé selon la revendication 8, dans lequel, avant l'étape b),
b') une ou plusieurs couches de gel sont introduites dans la moitié de moule.

10. Procédé selon la revendication 8 ou 9, dans lequel, après l'étape b) ou b') et avant l'étape c), une couche de matériau d'espacement, puis une couche de matériau fibreux sont introduites dans la moitié de moule.

11. Procédé selon la revendication 8, dans lequel l'étape c) est réalisée par le procédé d'infusion sous vide.

12. Utilisation des composants composites fibreux selon l'une quelconque des revendications 1 à 7 pour la fabrication de pales de rotor d'installations éoliennes, pour la fabrication de composants de carrosserie d'automobiles ou dans la construction d'avions, dans des composants de la construction d'immeubles ou de rues (p. ex. des couvercles de regard) et d'autres structures fortement sollicitées.
